# EUROPEAN PATENT SPECIFICATION

(11) **EP 1 897 669 B1**
(45) Date of publication and mention of the grant of the patent: **15.08.2018**
(21) Application number: 06767157.8
(22) Date of filing: 22.06.2006
(51) Int. Cl.: B29C 45/56, B29C 45/14, B29C 45/40

(54) **DIE FOR INJECTION COMPRESSION MOLDING**
WERKZEUG ZUM SPRITZPRÄGEN
MATRICE DE MOULAGE PAR INJECTION ET COMPRESSION

(30) Priority: 29.06.2005 JP 2005190467
(43) Date of publication of application: 12.03.2008
(73) Proprietor: NISSHA PRINTING CO., LTD., Nakagyo-ku Kyoto-shi Kyoto 604-8551 (JP)
(72) Inventor: FUJIMURA, Toshitsugu, NISSHA PRINTING CO., LTD., Kyoto-shi, Kyoto 604-8551 (JP)
(74) Representative: Lemcke, Brommer & Partner Patentanwälte Partnerschaft mbB
(86) International application number: PCT/JP2006/312499
(87) International publication number: WO 2007/000930

(56) References cited:
- JP-A- 10 235 703
- JP-A- 2002 316 343
- JP-A- 2002 316 343
- US-A1- 2004 109 919

## Description

### [Technical Field]

The present invention relates to a die for injection-compression molding, and particularly relates to a die for decoration simultaneous with injection-compression molding whereby an article is decorated simultaneously with injection-compression molding, has excellent optical characteristics, and does not need post-processing.

### [Background Art]

Conventional methods for decorating the surface of a resin molding include an injection-molding-simultaneous decoration method that utilizes a transfer material, an IMD (registered trademark: Nissha Printing Co., Ltd.) foil, or other decoration sheet. The range of utilization of the injection-molding-simultaneous decoration method has significantly increased in recent years. This injection-molding-simultaneous decoration method is also applied to products such as mobile telephone window panels in which a transparent portion extends over a wide range of the surface of a molded article. In this case, good optical characteristics must be provided in order for an internal liquid crystal panel to show through the transparent portion.

With recent demand for reduced wall thickness (1 mm or less, for example) of molded articles, it is becoming difficult to adapt the usual injection-molding-simultaneous decoration method in use until now. There is therefore a desire for the establishment of a production method in which an injection-molding-simultaneous decoration method is combined with an injection-compression molding method. An injection-compression molding method can produce enhanced transfer properties, reduced weld lines, reduced shrinkage, reduced deformation, and enhanced optical characteristics compared to the usual injection molding method. This method has therefore been utilized for molding precision components, manufacturing optical lenses, CDs, and DVDs, and other products.

The die described in Patent Document 1 is a technique relating to an injection-molding-simultaneous decoration method for producing a mobile telephone window panel or other thin-walled molded article. The die described in Patent Document 2 is a technique relating to an injection-compression molding method.

[Patent Document 1] Japanese Laid-open Patent Application No. 2004-314611
[Patent Document 2] Japanese Laid-open Patent Application No. 11-179769

### [Summary of the Invention]

### [Problems the Invention Is Intended To Solve]

In the die described in Patent Document 1, a molding space formed by a first die and a second die comprises a product molding space, a molding space for resin injection, and a molding space for resin discharge. Resin is therefore molded not only in the product molding space, but also in the molding space for resin discharge. Consequently, in order to obtain the desired molding, the unnecessary portions molded on the periphery of the product must be cut off in post-processing.

In the die described in Patent Document 2, a side-gate system is employed by a gate unit used for injecting the molding resin. Consequently, traces of the side gate must be cut from the product in order to obtain the desired molding.

The dies according to Patent Document 1 and Patent Document 2 as described above have drawbacks of impracticality due to manufacturing cost.

Noting that the drawbacks of the die described in Patent Document 2 are caused by the side-gate system, the inventors investigated the possibility of changing to another gate system, such as a pin gate system or a hot runner valve gate system, for example, but encountered the drawbacks described below.

In a pin-gate or hot-runner-valve-gate die, the product is generally ejected after die opening by an ejector pin pushing on the surface of the product. When these systems are applied to an injection-compression molding die in the same manner as a conventional die, a state occurs after molding of the injection-compression molded article in which the internal volume of the molding space is increased by the withdrawal of the compression block. At this time, the injection-compression-molded article moves in conjunction with the withdrawal of the compression block. As a result, there is a risk that excessive force will be applied to the external periphery of the injection-compression-molded article, that damage will occur on the surface of the injection-compression-molded article, and that the injection-compression-molded article will be deformed.

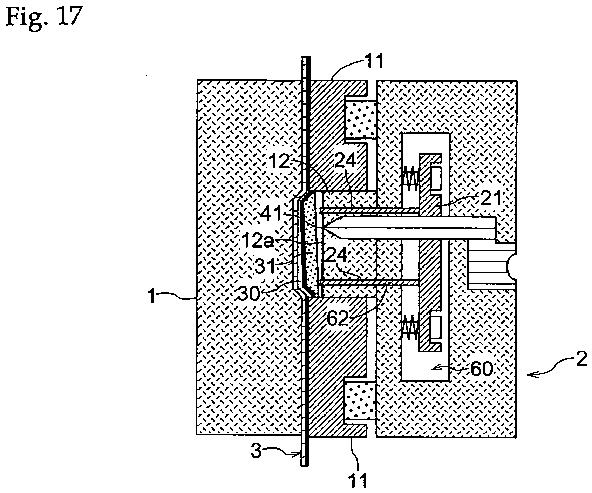

The abovementioned drawbacks will be described using an example of a case in which an injection-compression molding die is used as a die for simultaneous injection-compression molding and decoration, as shown in FIG. 17.

A decoration sheet 3 is disposed between a first die 1 and a second die 2, and a molding resin 31 is loaded between the decoration sheet 3 and the second die 2 from a gate unit 41. The second die 2 has a compression block 12 for reducing the volume of a molding space 30 and compressing the loaded molding resin 31, an external peripheral plate 11 positioned on the periphery of the compression block 12, and ejector pins 24 for ejecting the simultaneously injection-compression molded and decorated article from the second die 2. The ejector pins 24 are fixedly supported by an ejector plate 21 disposed so as to be able to move back and forth in a working space 60 inside the second die 2. The ejector pins 24 are provided so as to move integrally with the compression block 12 when the positions of the compression block 12 and the external peripheral plate 11 change relative to each other.

After the molding resin 31 is compressed by the compression block 12, and the simultaneously injection-compression molded and decorated article is molded, the compression block 12 is withdrawn, and the positional relationship of the compression block 12 relative to the external peripheral plate 11 is changed. The ejector pins 24 move integrally with the compression block 12 at this time, and the ejector pins 24 separate from the simultaneously injection-compression molded and decorated article. The simultaneously injection-compression molded and decorated article therefore becomes able to move inside the molding space 30, and its position becomes unstable.

JP 2002-316343 A discloses an injection-compression molding die for obtaining an injection-compression molded article by loading molten molding resin into a molding space, formed by a first die and a second die that face each other, through a molding resin injection gate unit provided to said second die. The injection-compression molding die according to this prior art document includes further a compression block for reducing the volume of the molding space and compressing said loaded molding resin, and an external peripheral plate positioned on the external periphery of the compression block is provided to the second die. During withdrawal of the compression block after molding of the injection-compression molded article, there is a risk that damage will occur on the surface of the article and that the article will be deformed as described above.

An object of the present invention is to provide a die for injection-compression molding that is capable of maintaining the position of the injection-compression molded article inside the molding space after molding.

### [Means For Solving The Above-mentioned Problems]

The inventors developed the present invention as a result of conducting further research in view of the foregoing drawbacks, and investigating the use of a method for compression molding whereby the compression block is advanced so as to reduce the volume inside the molding space while the external periphery of the product is enclosed by an external peripheral plate.

Specifically, the present invention is configured as described below in order to achieve the aforementioned objects.

The invention is defined in claim 1.

According to a second aspect, the ejector pin is disposed so as to partially protrude into the molding space during loading of the molding resin.

According to a third aspect, the compression block, the external peripheral plate, and the ejector pin is provided to the second die, and the ejector pin is provided so as to penetrate the compression block.

According to a fourth aspect, the die body in the second die has an internally disposed working space; the front-side barrier wall constituting a portion of the working space has an ejector pin insertion hole and an insertion hole for the ejector plate fixing pin; the compression block is fixedly supported on the outside of the front-side barrier wall; the compression block has an ejector pin insertion hole communicated with the ejector pin insertion hole of the front-side barrier wall; the external peripheral plate capable of separating from and contacting the front-side barrier wall is disposed on the external periphery of the compression block and can slide relative to the compression block; an ejector plate is disposed in the working space so as to be able to move forward and backward; the ejector pin fixedly supported by the ejector plate is placed through the ejector pin insertion hole of the front-side barrier wall and the ejector pin insertion hole of the compression block; ejector plate fixing pin having an anti-disconnect head at the back thereof and extending through the ejector plate is inserted into the ejector plate fixing pin insertion hole, the distal end thereof being fixedly supported by the external peripheral plate; and springs wound on the ejector plate fixing pin is provided between the ejector plate and the front-side barrier wall.

According to a fifth aspect, the second die further comprises a hole-forming bushing that passes through the compression block; and the positional relationship between the compression block and the external peripheral plate can be varied without changing the positional relationship between the external peripheral plate, the ejector pin, and the hole-forming bushing.

According to a sixth aspect, the first die comprises suction means for drawing in a decoration sheet disposed between the first die and the second die.

According to a seventh aspect, the first die and the second die close across a gap that corresponds to the thickness of the decoration sheet in a state in which the decoration sheet is disposed between the first die and the second die that face each other.

### [Effect of the Invention]

According to the first aspect, the positional relationship between the compression block and the external peripheral plate can be varied without changing the positional relationship between the external peripheral plate and the ejector pin, particularly when the compression block is withdrawn after compression of the molding resin. A state in which the injection-compression molded article is retained by the ejector pin can therefore be maintained even when the compression block is withdrawn and the volume of the molding space is increased. As a result, the desired position can be maintained without movement of the injection-compression molded article inside the molding space.

In a case in which the gate unit is provided to the compression block, the gate unit and the transfer film are separated from each other at a distance of about 1.5 mm during injection of the molding resin when the decoration sheet is disposed between the first die and the second die. The risk of defects occurring due to ink flow is therefore reduced even when the injection-compression molded article has a small wall thickness of about 1 mm.

According to the second aspect, a configuration is adopted whereby the ejector pin partially protrude into the molding space during loading of the molding resin. During compression of the molding resin, the compression block can be pushed in with respect to the external peripheral plate without changing the positional relationship between the external peripheral plate and the ejector pin. An injection-compression molded article can therefore be molded in a state in which portions of the ejector pin is buried. When the compression block is subsequently withdrawn, only the compression block moves with respect to the external peripheral plate, and the positional relationship between the external peripheral plate and the ejector pin is unchanged. A portion of the ejector pin is therefore buried in the injection-compression molded article, and the article can be reliably retained by the ejector pin.

According to the third aspect, the side on which the compression block compresses and the ejector pin protrudes constitutes the side of the injection-compression molded article that faces the second die. The injection-compression molded article can therefore be molded without damaging the side of the article that faces the first die. When a simultaneously injection-compression molded and decorated article is molded using a decoration sheet, the simultaneously injection-compression molded and decorated article can be molded without damage to the decoration sheet by placing the decoration sheet closer to the first die than to the loaded molding resin.

According to the fourth aspect, the ejector pin is fixedly supported by the ejector plate, and ejector plate fixing pin having an anti-disconnect head at the back thereof are inserted into the insertion holes for the ejector plate fixing pin, the distal ends thereof being fixedly supported by the external peripheral plate. The positional relationship between the compression block and the external peripheral plate can therefore be varied without changing the positional relationship between the external peripheral plate and the ejector pin. As a result, a state in which the injection-compression molded article is retained by the ejector pin can therefore be maintained even when the compression block is withdrawn and the volume of the molding space is increased, and the desired position can be maintained without movement of the injection-compression molded article inside the molding space.

According to the fifth aspect, an injection-compression molded article having a hole portion can be obtained by further providing a hole-forming bushing whereby the second die penetrates the compression block. The hole-forming bushing is disposed so that a portion thereof protrudes into the molding space during loading of the molding resin. The positional relationship between the compression block and the external peripheral plate can be varied without changing the positional relationship between the external peripheral plate and the hole-forming bushing during compression of the molding resin. An injection-compression molded article can therefore be molded in a state in which a portion of the hole-forming bushing is buried. Then, when the compression block is withdrawn, only the compression block moves with respect to the external peripheral plate, and the positional relationship between the external peripheral plate and the hole-forming bushing is unchanged. The article can therefore be retained by the hole-forming bushing in addition to the ejector pin. As a result, the injection-compression molded article can be stably fixed in position inside the molding space.

According to the sixth aspect, the decoration sheet can be retained in a state of conformity with the first die by using the suction means to draw in the decoration sheet. Deformation of the decoration sheet during loading of the molding resin can therefore be minimized, and a satisfactory simultaneously injection-compression molded and decorated article can be molded.

According to the seventh aspect, a gap corresponding to the thickness of the decoration sheet can be provided between the first die and the second die during loading of the molding resin and compression of the molding resin. Gas can therefore be released from the gap between the first die and the second die during loading and compression of the molding resin, and a satisfactory simultaneously injection-compression molded and decorated article can be molded.

### [Best Mode For Carrying Out The Invention]

Embodiments of the injection-compression molding die according to the present invention will be described hereinafter.

### [First Embodiment]

The injection-compression molding die according to a first embodiment will first be described based on the drawings.

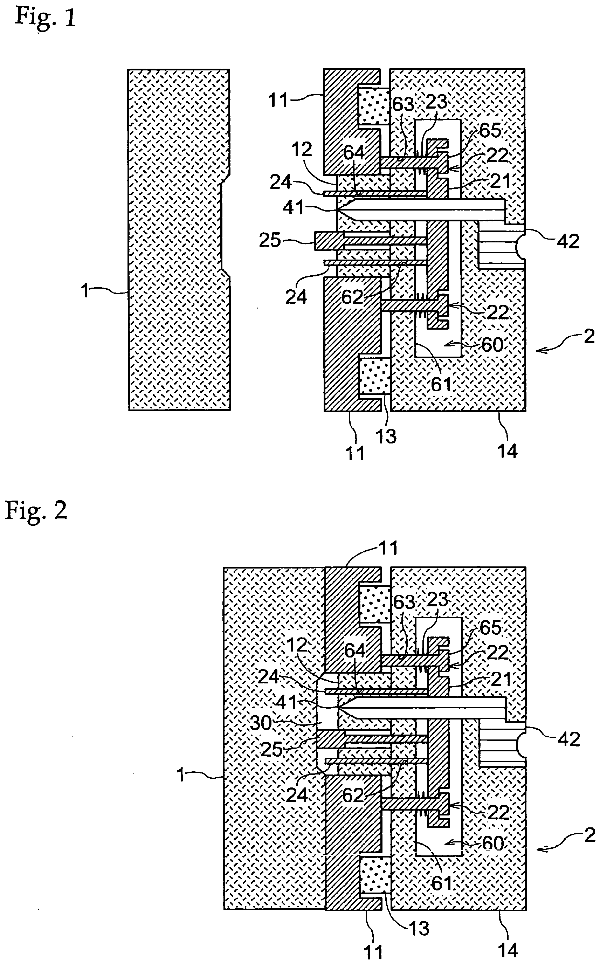

FIG. 1 is a schematic sectional view showing a state in which the die is opened.

In FIG. 1, the first die 1 is formed in a rectangular or other shape in the same manner as a conventional die, and a shape for forming the surface of the injection-compression molded article is carved into the surface of the first die 1 facing the second die 2.

The second die 2 is formed as a rectangle or other shape whose width and height correspond to the first die 1. A compression block 12 in which a shape is carved for forming the back surface of the injection-compression molded article is attached to the surface of the second die 2 facing the first die 1. An external peripheral plate 11 for forming the external peripheral shape of the injection-compression molded article is provided to the external periphery of the compression block 12. The external peripheral plate 11 is formed as a rectangle or other shape whose width and height correspond to the first die 1, in the same manner as the second die 2. In this drawing, the compression block 12 forms the entire back surface of the injection-compression molded article. The compression block 12 may partially form the back surface of the injection-compression molded article, and the remaining portion may be formed by the external peripheral plate 11.

The structure of the second die 2 will be described in further detail. A working space 60 is present inside a second die body 14. The front-side barrier wall 61 constituting a portion of the working space 60 has ejector pin insertion holes 62 and insertion holes 63 for the ejector plate fixing pins. The compression block 12 is fixedly supported on the outside of the front-side barrier wall 61. The compression block 12 has ejector pin insertion holes 64 communicated with the ejector pin insertion holes 62 of the front-side barrier wall 61. The external peripheral plate 11 capable of separating from and contacting the front-side barrier wall 61 is disposed on the external periphery of the compression block 12 and can slide relative to the compression block 12. An ejector plate 21 is disposed in the working space 60 so as to be able to move forward and backward. Ejector pins 24 fixedly supported by the ejector plate 21 are placed through the ejector pin insertion holes 62 of the front-side barrier wall 61 and the ejector pin insertion holes 64 of the compression block 12. Ejector plate fixing pins 22 having anti-disconnect heads 65 at the backs thereof are inserted into the insertion holes 63 for the ejector plate fixing pins, and the distal ends thereof are fixedly supported by the external peripheral plate 11. Springs 23 wound on the ejector plate fixing pins 22 are provided between the ejector plate 21 and the front-side barrier wall 61. The external peripheral plate 11 and the second die body 14 are separated from each other at a prescribed distance of approximately 0.5 mm, for example, by an elastic body 13.

FIG. 2 is a schematic sectional view showing the state immediately after the die is closed.

In FIG. 2, the molding space 30 is formed by the first die 1, the external peripheral plate 11, and the compression block 12. Specifically, the molding space 30 is formed by the first die 1 and the second die 2. The molding space 30 accommodates the ejector pins 24 for ejecting the injection-compression molded article from the second die 2, and a hole-forming bushing 25 for forming a hole in the injection-compression molded article. Specifically, the ejector pins 24 and the hole-forming bushing 25 are disposed so as to partially protrude into the molding space 30. The external peripheral plate 11, the ejector pins 24, and the hole-forming bushing 25 are connected to each other, whereby the positional relationship of these three components to each other does not change when the positional relationship between the compression block 12 and the external peripheral plate 11 changes. Specifically, a configuration is adopted whereby the positional relationship between the compression block 12 and the external peripheral plate 11 can change without a change in the positional relationship between the external peripheral plate 11, the ejector pins 24, and the hole-forming bushing 25. The upper surface of the hole-forming bushing 25 is in contact with the first die 1.

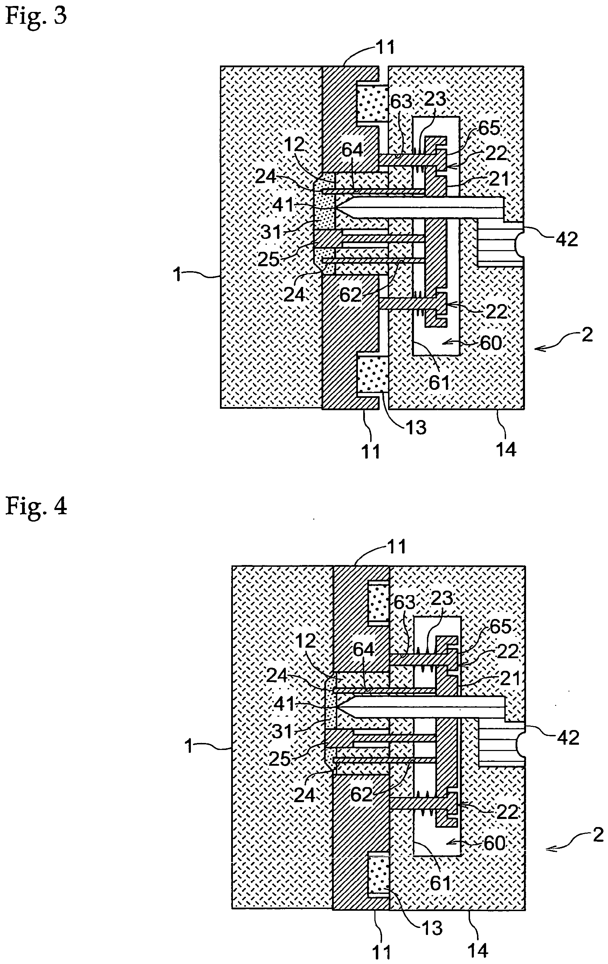

FIG. 3 is a schematic sectional view showing the manner in which the molding resin is injected into the die.

In FIG. 3, the molding resin 31 is injected into the molding space 30 through a gate unit 41 provided to the compression block 12. The gate unit 41 herein is composed of a valve gate (not shown in the drawing) of a hot runner 42. After the molding resin 31 is injected, the valve gate is closed.

The gate unit 41 may be a pin gate of a cold runner. In the case of a valve gate of a hot runner 42, there is no backflow of resin through the gate during compression. This configuration is preferred since better compression molding effects can be obtained.

The molding resin 31 may be a polystyrene-based resin, polyolefin-based resin, acrylonitrile/butadiene/styrene resin, acrylic resin, or other multi-purpose resin. These resins are not limiting, and it is also possible to use polyphenylene oxide/polystyrene resin, polycarbonate-based resin, polyacetal-based resin, polycarbonate-modified polyphenylene ether resin, polybutylene terephthalate resin, and other multi-purpose engineering resins, as well as polysulfone resin, polyphenylene sulfide-based resin, polyphenylene oxide-based resin, polyarylate resin, polyether imide resin, polyimide resin, liquid crystal polyester resin, polyallyl-based heat-resistant resin, and other super engineering resins.

FIG. 4 is a schematic sectional view showing the manner in which the molding resin is compressed after being injected.

In FIG. 4, the external peripheral plate 11 and the second die body 14 were until now separated by the expansion force of the elastic body 13. As a die-closing force larger than this expansion force is applied, the elastic body 13 is compressed, and the external peripheral plate 11 and the second die body 14 are brought into contact with each other. The positional relationship between the external peripheral plate 11 and the compression block 12 therefore changes, and the molding resin 31 loaded into the molding space 30 is compressed by the compression block 12.

The amount of compression created by the compression block 12 herein is commensurate with the distance by which the external peripheral plate 11 and the second die body 14 are separated from each other. For example, a thin spacer/shim or other component not shown in the drawing may be used for fine adjustment of this distance.

There is no change in the positional relationship between the external peripheral plate 11, the ejector pins 24 passed through the compression block 12 and fixed to the ejector plate 21, and the hole-forming bushing 25. This is because the positional relationship between the external peripheral plate 11 and the ejector plate 21 is maintained by the ejector plate fixing pins 22 and the expansion force of the spring 23 even when there is only a small distance between the external peripheral plate 11 and the second die body 14.

Specifically, the volume inside the molding space 30 is reduced by the operation of the compression block 12, but the ejector pins 24 and the hole-forming bushing 25 can be considered unmoved. Therefore, the application of excessive force to the injection-compression molded article by the movement of the ejector pins 24 can be prevented with essentially no change in the positional relationship between the molding resin 31 and the ejector pins 24, and a satisfactory injection-compression molded article can be obtained.

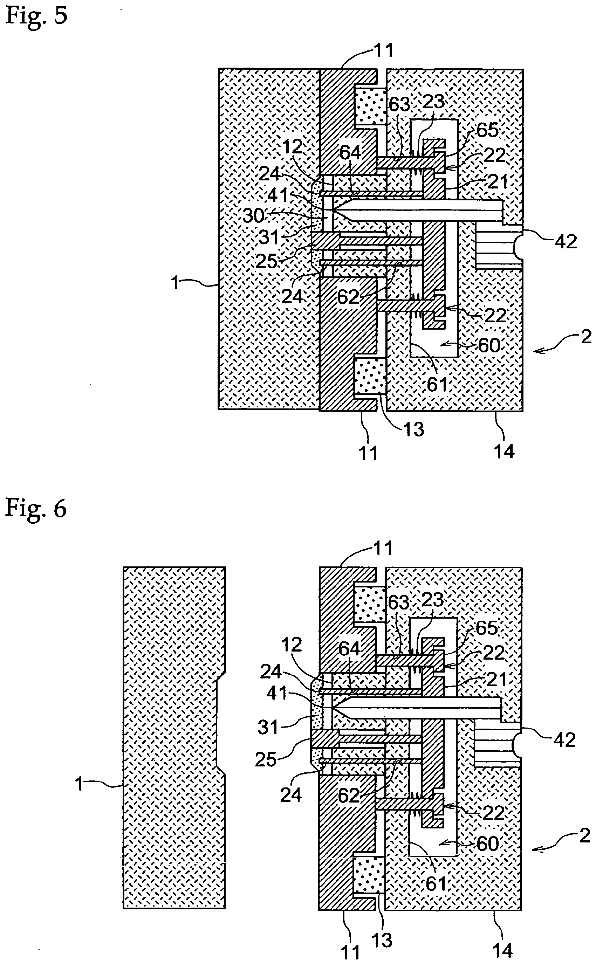

FIG. 5 is a schematic sectional view showing a state in which the compression block is withdrawn after the molding resin is compressed.

In FIG. 5, when the die-opening operation of the molding machine (not shown in the drawing) is performed, the system changes from a state in which the external peripheral plate 11 and the second die body 14 are in contact with each other to a state in which the external peripheral plate 11 and the second die body 14 are again separated from each other by the expansion force of the elastic body 13.

In this arrangement, the relationship between the expansion force T1 of the elastic body 13 and the expansion force T2 of the spring 23 must be set so as to satisfy the relation T1 > T2 in order to establish a state in which the external peripheral plate 11 and the second die body 14 are again separated from each other.

As the state occurs in which the external peripheral plate 11 and the second die body 14 are separated from each other, the positional relationship between the external peripheral plate 11 and the compression block 12 changes. The positional relationship between the external peripheral plate 11 and the ejector plate 21 is not changed at this time by the ejector plate fixing pins 22 and the expansion force of the spring 23. There is therefore also no change in the positional relationship between the external peripheral plate 11, the ejector pins 24, and the hole-forming bushing 25.

The volume of the molding space 30 is increased by the withdrawal of the compression block 12. At this time, the injection-compression molded article is fixed in position in the inside the molding space 30 by the ejector pins 24 and the hole-forming bushing 25.

The movement of the ejector pins 24 and the compression block 12 relative to each other will be further described.

During loading of the molding resin 31, the ejector pins 24 and the hole-forming bushing 25 are disposed so as to partially protrude into the molding space 30 as shown in FIG. 3. When the compression block 12 advances forward, the positional relationship between the compression block 12 and the external peripheral plate 11 can be varied without any change in the positional relationship between the external peripheral plate 11, the ejector pins 24, and the hole-forming bushing 25, as shown in FIG. 4. The injection-compression molded article can therefore be molded in a state in which the ejector pins 24 and hole-forming bushing 25 are partially buried therein. When the compression block 12 is withdrawn, the positional relationship between the compression block 12 and the external peripheral plate 11 can be varied without any change in the positional relationship between the external peripheral plate 11, the ejector pins 24, and the hole-forming bushing 25, as shown in FIG. 5. The position of the injection-compression molded article inside the molding space 30 can therefore be accurately fixed by the ejector pins 24 and the hole-forming bushing 25 when the compression block 12 is withdrawn. The ejector pins 24 are provided at a distance in the vertical direction. The position of the injection-compression molded article can therefore be stably maintained.

FIG. 6 is a schematic sectional view showing a state in which the die is opened after the compression block is withdrawn.

FIG. 6 shows the manner in which the injection-compression molded article is retained by the ejector pins 24 and the hole-forming bushing 25.

FIG. 7 is a schematic sectional view showing a state in which the injection-compression molded article is ejected by the ejector pins 24 after the die is opened.

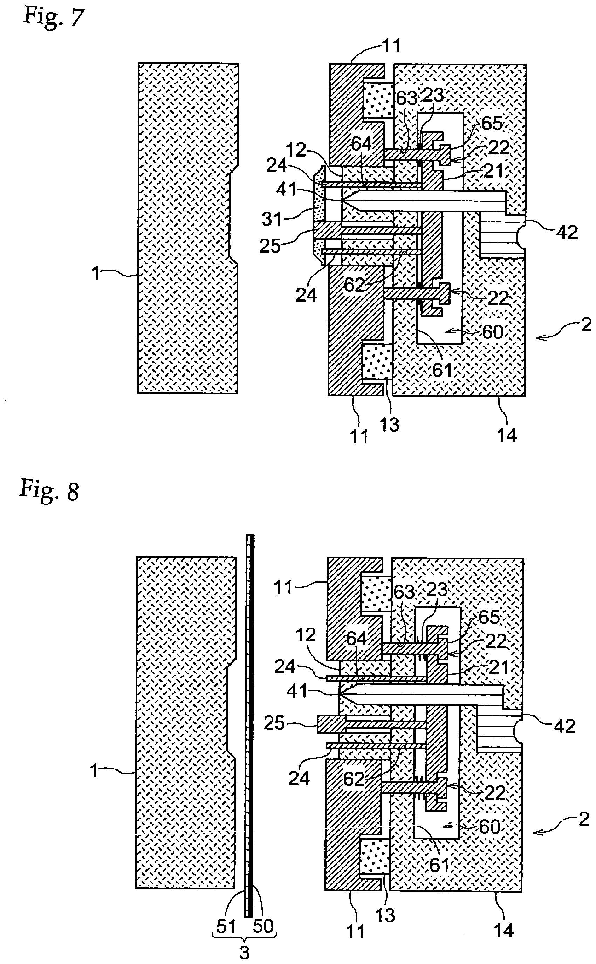

In FIG. 7, the ejector plate 21 is moved towards the first die 1 by an ejector plate operating mechanism (not shown in the drawing). Methods of operation such as operation by an air cylinder or operation by an ejector rod connected to the first die 1, for example, may be selected for the ejector plate operating mechanism.

The spring 23 is contracted at this time, but the positions of the ejector plate fixing pins 22 and the external peripheral plate 11 are still maintained with respect to the second die body 14.

As the ejector plate 21 moves, the injection-compression molded article is ejected by the ejector pins 24 and the hole-forming bushing 25. The injection-compression molded article may then be obtained by an attraction method that uses suction from a product extraction robot, or by a capturing method or other existing means.

### [Second Embodiment]

This second embodiment uses the injection-compression molding die according to the present invention as a die for decoration performed simultaneously with injection-compression molding. The die for simultaneous injection-compression molding and decoration according the second embodiment will be described hereinafter based on the drawings. Structural aspects that are the same as those of the abovementioned first embodiment will not be described.

FIG. 8 is a schematic sectional view showing a state in which the die is opened.

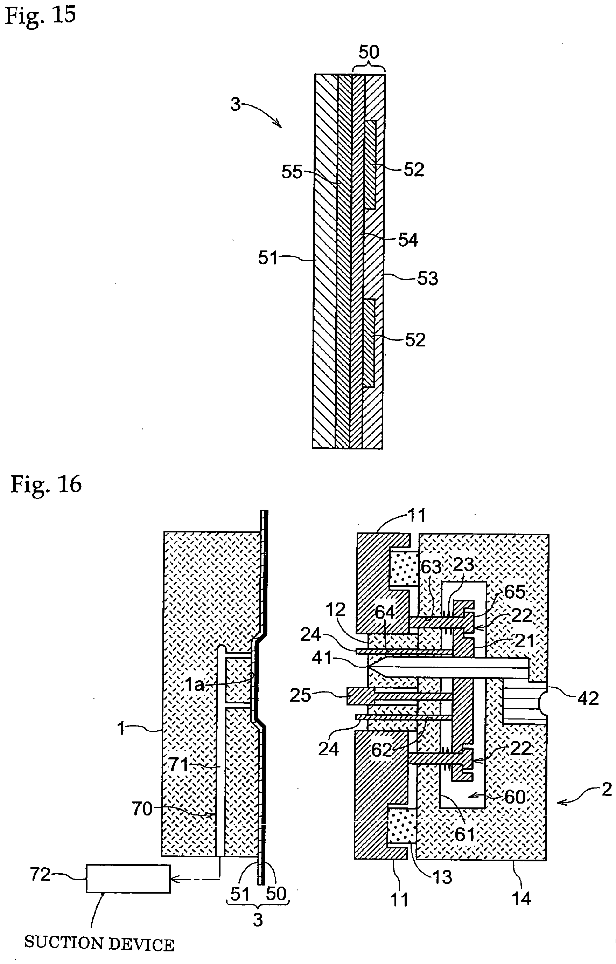

In FIG. 8, a decoration sheet 3 is disposed between a first die 1 and a second die 2 that face each other. This decoration sheet 3 is formed from a base sheet 51, a decoration layer 50, and other components. The decoration layer 50 is composed of a design layer 52, an adhesive layer 53, and other layers (see FIG. 15), and is used when transfer of only the decoration layer 50 to the molding resin 31 is desired.

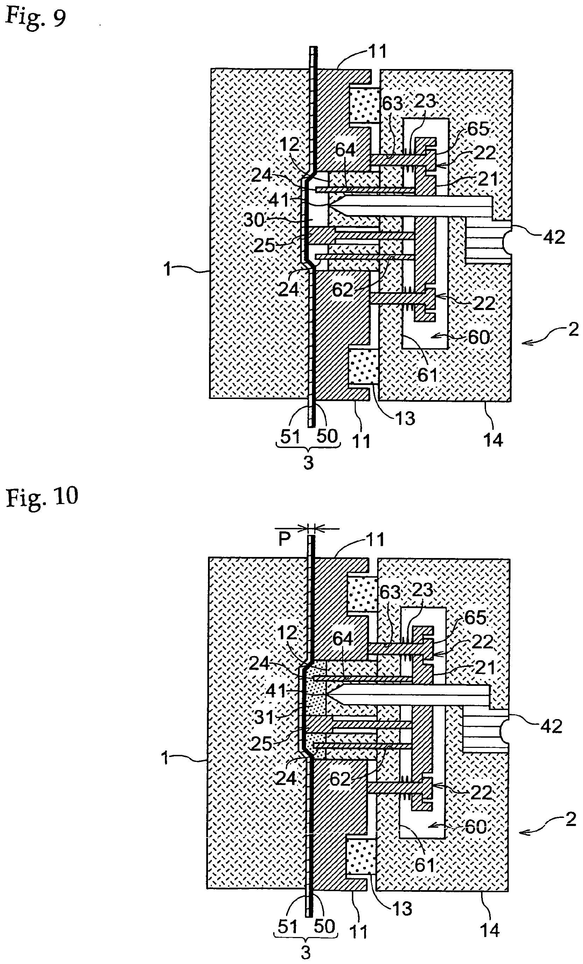

FIG. 9 is a schematic sectional view showing the state immediately after the die is closed.

In FIG. 9, the molding space 30 is formed by the first die 1, the decoration sheet 3 disposed in the first die 1, and the second die 2. The ejector pins 24 and the hole-forming bushing 25 are disposed so as to partially protrude into the molding space 30.

FIG. 10 is a schematic sectional view showing the manner in which the molding resin is injected into the die.

In FIG. 10, the molding resin 31 is loaded from the gate unit 41 into the molding space 30 enclosed by the decoration sheet 3, the external peripheral plate 11, and the compression block 12. The first die 1 and the second die 2 close across a gap P that corresponds to the thickness of the decoration sheet 3. Gas can therefore be released through the gap P during loading of the molding resin 31.

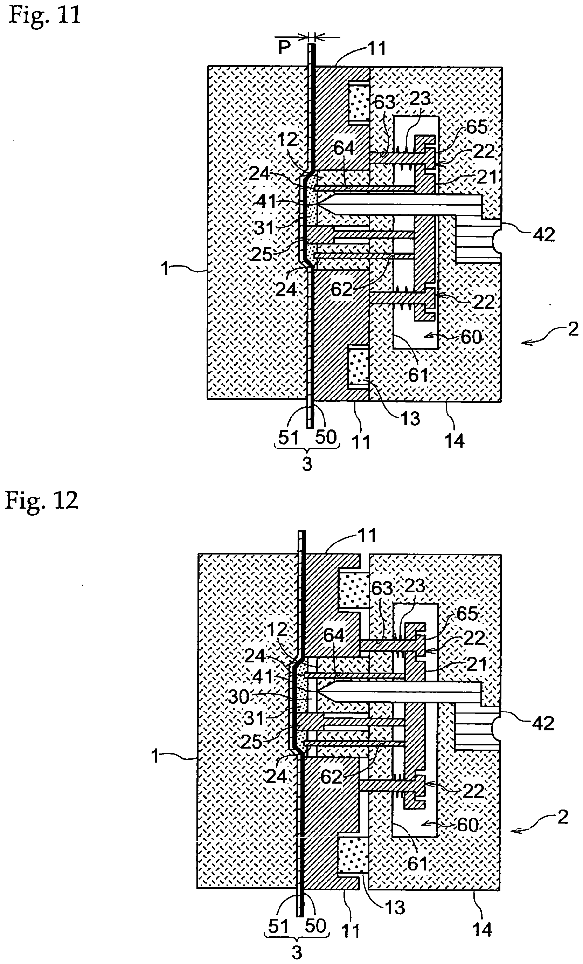

FIG. 11 is a schematic sectional view showing the manner in which the molding resin is compressed after being injected.

In FIG. 11, the volume inside the molding space 30 is reduced by the operation of the compression block 12. At this time, a state is maintained in which the ejector pins 24 and hole-forming bushing 25 do not move but partially protrude into the molding space 30. Gas can also be released during compression of the molding resin 31 through the gap P between the first die 1 and the second die 2.

FIG. 12 is a schematic sectional view showing a state in which the compression block is withdrawn after the molding resin is compressed.

In FIG. 12, the volume of the molding space 30 is increased by the withdrawal of the compression block 12. At this time, a state is maintained in which the ejector pins 24 and hole-forming bushing 25 do not move but partially protrude into the molding space 30. The simultaneously injection-compression molded and decorated article thus molded is therefore fixed in position inside the molding space 30 by the ejector pins 24 and the hole-forming bushing 25.

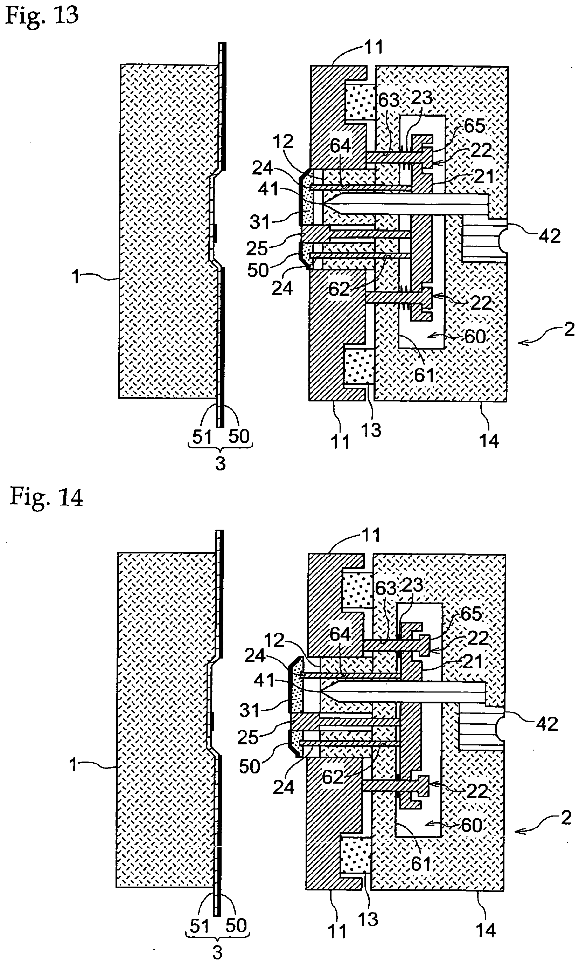

FIG. 13 is a schematic sectional view showing a state in which the die is opened after the compression block is withdrawn.

FIG. 13 shows the manner in which the simultaneously injection-compression molded and decorated article is retained by the ejector pins 24 and the hole-forming bushing 25 in a state in which the decoration layer 50 of the decoration sheet 3 is peeled from the base sheet 51 and transferred to the molding resin 31.

FIG. 14 is a schematic sectional view showing a state in which the simultaneously injection-compression molded and decorated article is ejected by the ejector pins 24 after the die is opened.

In FIG. 14, the ejector plate 21 is moved towards the first die 1 by an ejector plate operating mechanism (not shown in the drawing). As the ejector plate 21 moves, the simultaneously injection-compression molded and decorated article is ejected by the ejector pins 24 and the hole-forming bushing 25.

FIG. 15 is a schematic sectional view showing the structure of the transfer film as the decoration sheet 3 used in the die according to the second embodiment.

PET (polyethylene terephthalate) having excellent heat resistance is preferably used as the material of the base sheet 51. It is possible to use a single-layer film selected from polycarbonate resin, polyamide resin, polyimide resin, polyester resin, acrylic resin, olefin resin, urethane resin, acrylonitrile butadiene styrene resin, vinyl chloride resin, and the like. It is also possible to use a laminate film or copolymer film composed of two or more types of resin selected from the resins mentioned above.

A base sheet 51 having a thickness of 5 to 500 µm may be used. A base sheet 51 having a thickness of 25 to 75 µm is preferred when ease of handling is considered. A base sheet 51 having a thickness of 38 to 50 µm is preferably used when molding stability is considered.

The peeling layer 54 becomes the outermost surface when the base sheet 51 is peeled off after the design is transferred, and functions as a protective layer for the design.

Materials used for this peeling layer 54 include acrylic-based resin, soluble-cotton-based resin, polyurethane-based resin, chlorinated-rubber-based resin, vinyl chloride-vinyl acetate copolymer-based resin, polyamide-based resin, polyester-based resin, epoxy-based resin, polycarbonate-based resin, olefin-based resin, acrylonitrile butadiene styrene resin, and the like. The film thickness of the peeling layer 54 is preferably 0.5 to 50 µm.

The release layer 55 is a surface-treated layer on the base sheet 51. This release layer 55 is provided to facilitate peeling of the peeling layer 54 from the base sheet 51. Therefore, this release layer 55 may be omitted when peeling can be accomplished using only the base sheet 51 and the peeling layer 54. The same material as the peeling layer 54 may be used to form the release layer 55.

The design layer 52 that includes letters, symbols, designs, coated patterns, and the like is sealed between the peeling layer 54 and the adhesive layer 53. Materials used for this design layer 52 may include acrylic-based resin, soluble-cotton-based resin, polyurethane-based resin, chlorinated-rubber-based resin, vinyl chloride-vinyl acetate copolymer-based resin, polyamide-based resin, polyester-based resin, epoxy-based resin, and the like.

The design layer 52 may also be formed from aluminum, chromium, copper, nickel, indium, tin, silicon oxide, or another metal film layer, for example, by vacuum deposition, plating, or another method. The film thickness of the design layer 52 is preferably set to a range of 0.5 µm to 50 µm in order to obtain adequate design properties. When the design layer 52 is formed from a metal film layer, a thickness of 50 Å to 1200 Å is preferred.

The adhesive layer 53 is provided to bond the design layer 52 to the surface of the molded article. The material used therein may include acrylic-based resin, soluble-cotton-based resin, polyurethane-based resin, chlorinated-rubber-based resin, vinyl chloride-vinyl acetate copolymer-based resin, polyamide-based resin, polyester-based resin, epoxy-based resin, polycarbonate-based resin, olefin-based resin, acrylonitrile butadiene styrene resin, or the like. The thickness of this adhesive layer 53 is preferably 0.5 to 50 µm.

In this second embodiment, decoration was performed using a transfer film, but a decoration film may also be used. In a decoration film, a design layer is formed directly on a base film without using a peeling layer. After decoration, the base film is integrated with the simultaneously injection-compression molded and decorated article.

A decoration film base sheet 51 having a thickness of 25 to 1000 µm may be used. A decoration film base sheet 51 having a thickness of 50 to 600 µm is preferably used when handling properties are considered. When molding stability is considered, a decoration film base sheet 51 having a thickness of 100 to 500 µm is preferably used.

A mobile telephone part that is made of acrylic resin, has an outside longitudinal dimension of approximately 50 mm, a transverse dimension of approximately 40 mm, and an average thickness of approximately 0.8 mm, and is provided with a hole near the bottom of the product was formed using the die for simultaneous injection-compression molding and decoration according to the second embodiment. The amount of compression produced by the compression block operation of this die was approximately 0.5 mm, and the gate unit was a hot runner valve gate.

There was no variation in the dimensions of the molded article continuously molded using a product extraction robot, and the ability to consistently produce a molded article was confirmed. There was, of course, no need to perform post-processing that involved gate cutting for the external periphery of the molded article.

Ink flow did not occur near the gate unit of this molded article, and there were no problems related to the appearance of the product. Even when the transparent window portion of the molded article was observed through a polarizing plate, internal stress usually seen near the gate unit was not observed, and superior optical characteristics were confirmed.

### [Third Embodiment]

This third embodiment is a modification of the abovementioned second embodiment. The die for simultaneous injection-compression molding and decoration according to the third embodiment will be described hereinafter based on the drawings. Structural aspects that are the same as those of the abovementioned second embodiment will not be described.

FIG. 16 is a schematic sectional view showing a state in which the die is opened.

In FIG. 16, the first die 1 is provided with a suction means 70 for drawing in the decoration sheet 3 disposed between the first die 1 and the econd die 2. The suction means 70 is composed of a communicating portion 71 that is communicated with a die cavity 1a for the molding space formed in the first die 1, and a suction device 72 for drawing in air through the communicating portion 71. The suction means 70 draws in the decoration sheet 3, whereby the decoration sheet 3 can be maintained in a state of conformity to the die cavity 1a. The decoration sheet 3 can therefore be prevented from deforming during loading of the molding resin 31.

### [Other Embodiments]

(1) In the first through third embodiments described above, the compression block 12, external peripheral plate 11, and ejector pins 24 are provided to the second die 2. Instead of this configuration, the compression block 12, external peripheral plate 11, and ejector pins 24 may be provided to the first die 1.
(2) In the first through third embodiments described above, ejector pins 24 are provided at a distance in the vertical direction, but the number of ejector pins 24 may be appropriately changed. The position in which the ejector pins 24 are disposed may also be appropriately changed. For example, the ejector pins 24 may be provided at a distance in the horizontal direction.

### [Industrial Applicability]

The present invention may be applied to various types of injection-compression molding dies for obtaining an injection-compression molded article by loading molten molding resin from a gate unit into a molding space formed by a first die and a second die that face each other, and then reducing the volume of the molding space to compress the loaded molding resin, and curing the molding resin.

### [Brief Description of the Drawings]

FIG. 1 is a schematic sectional view showing a state in which the die according to the first embodiment is opened;
FIG. 2 is a schematic sectional view showing the state immediately after the die according to the first embodiment is closed;
FIG. 3 is a schematic sectional view showing the manner in which the molding resin is injected into the die according to the first embodiment;
FIG. 4 is a schematic sectional view showing the manner in which the molding resin is compressed after being injected according to the first embodiment;
FIG. 5 is a schematic sectional view showing a state in which the compression block is withdrawn after the molding resin is compressed according to the first embodiment;
FIG. 6 is a schematic sectional view showing a state in which the die is opened after the compression block is withdrawn according to the first embodiment;
FIG. 7 is a schematic sectional view showing a state in which the injection-compression molded article is ejected by the ejector pins after the die is opened according the first embodiment;
FIG. 8 is a schematic sectional view showing a state in which the die according to the second embodiment is opened;
FIG. 9 is a schematic sectional view showing the state immediately after the die according to the second embodiment is closed;
FIG. 10 is a schematic sectional view showing the manner in which the molding resin is injected into the die according to the second embodiment;
FIG. 11 is a schematic sectional view showing the manner in which the molding resin is compressed after being injected according to the second embodiment;
FIG. 12 is a schematic sectional view showing a state in which the compression block is withdrawn after the molding resin is compressed according to the second embodiment;
FIG. 13 is a schematic sectional view showing a state in which the die is opened after the compression block is withdrawn according to the second embodiment;
FIG. 14 is a schematic sectional view showing a state in which the simultaneously injection-compression molded and decorated article is ejected by the ejector pins after the die is opened according to the second embodiment;
FIG. 15 is a schematic sectional view showing the structure of the transfer film used in the die according to the second embodiment;
FIG. 16 is a schematic sectional view showing a state in which the die is opened according to the third embodiment; and
FIG. 17 is a schematic diagram showing a state in which the simultaneously injection-compression molded and decorated article is separated from the ejector pins and is unstably positioned in the molding space in the conventional die.

### [Key to Symbols]

1 first die
2 second die
3 decoration sheet (transfer film)
11 external peripheral plate
12 compression block
13 elastic body
14 second die body
21 ejector plate
22 ejector plate fixing pin
23 spring
24 ejector pin
25 hole-forming bushing
30 molding space
31 molding resin
41 gate unit
42 hot runner
50 decoration layer
51 base sheet
52 design layer
53 adhesive layer
54 peeling layer
55 release layer
60 working space
61 front-side barrier wall
62 ejector pin insertion hole
63 insertion hole for ejector plate fixing pin
64 ejector pin insertion hole
65 anti-disconnect head
70 suction means

## Claims

1. An injection-compression molding die for obtaining an injection-compression molded article by loading molten molding resin (31) into a molding space (30), formed by a first die (1) and a second die (2) that face each other, through a molding resin injection gate unit (41) provided to said second die (2), and then reducing the volume of said molding space (30) to compress said loaded molding resin (31), and curing said molding resin; wherein said injection-compression molding die is configured so that
a compression block (12) for reducing the volume of said molding space (30) and compressing said loaded molding resin (31), and an external peripheral plate (11) positioned on the external periphery of said compression block (12) are provided to said second die (2), said molding space (30) being formed by said compression block (12), said external peripheral plate (11) and said first die (1); a die body (14) in said second die (2) has an internally disposed working space (60) and; an ejector plate (21) is disposed in said working space (60) so as to be able to move forward and backward;
**characterized in that**
an ejector pin (24) for ejecting said injection-compression molded article is provided on said second die (2) so as to penetrate said compression block (12),
the apparatus further comprises an elastic body (13) provided between a die (14) supporting said compression block (12) and said external peripheral plate (11) for exerting an elastic force in a direction to move said die (14) and said external peripheral plate away from each other;
a front-side barrier wall (61) constituting a portion of said working space (60) has an ejector pin insertion hole (62) and an insertion hole (63) for the ejector plate fixing pin (22);
said compression block (12) is fixedly supported on the outside of said front-side barrier wall (61);
said compression block (12) has an ejector pin insertion hole (64) communicated with said ejector pin insertion hole (62) of said front-side barrier wall (61);
said external peripheral plate (11) capable of separating from and contacting said front-side barrier wall (61) is disposed on the external periphery of said compression block (12) and can slide relative to the compression block (12);
said ejector pin (24) fixedly supported by said ejector plate (21) is placed through the ejector pin insertion holes (62) of said front-side barrier wall (61) and the ejector pin insertion holes (64) of said compression block (12);
an ejector plate fixing pin (22) having an anti-disconnect head (65) at the back thereof and extending through said ejector plate (21) is inserted into said insertion hole (63) for the ejector plate fixing pin (22), the distal end thereof being fixedly supported by said external peripheral plate (11);
springs (23) wound on said ejector plate fixing pin (22) is provided between said ejector plate (21) and said front-side barrier wall (61); and
the positional relationship between said compression block (12) and said external peripheral plate (11) can be varied without changing the positional relationship between said external peripheral plate (11) and said ejector pin (24)

2. The injection-compression molding die according to claim 1, wherein said ejector pin (24) is disposed so as to partially protrude into said molding space (30) during loading of said molding resin (31).

3. The injection-compression molding die according to claim 1, wherein
said second die (2) further comprises a hole-forming bushing (25) that passes through said compression block (12); and
the positional relationship between said compression block (12) and said external peripheral plate (11) can be varied without changing the positional relationship between said external peripheral plate (11), said ejector pin (24), and said hole-forming bushing (25).

4. The injection-compression molding die according to claim 1, wherein said first die (1) comprises suction means (70) for drawing in a decoration sheet (3) disposed between said first die (1) and said second die (2).

5. The injection-compression molding die according to claim 1, configured so that said first die (1) and said second die (2) close across a gap (P) that corresponds to the thickness of said decoration sheet (3) in a state in which the decoration sheet (3) is disposed between said first die (1) and said second die (2) that face each other.

## Patentansprüche

1. Spritzpresswerkzeug zum Erhalten eines spritzgepressten Formteils durch Einspritzen geschmolzenen Pressharzes (31) in eine Kavität (30), die von einer ersten Werkzeughälfte (1) und einer zweiten Werkzeughälfte (2) gebildet wird, die zueinander weisend angeordnet sind, durch eine Pressharz-Spritz-Einlauf-Einheit (41), die an der zweiten Werkzeughälfte (2) vorgesehen ist, und dann Verringern des Volumens der Kavität (30) zum Komprimieren des eingespritzten Pressharzes (31), und Vulkanisieren des Pressharzes; wobei das Spritzpresswerkzeug so konfiguriert ist, dass
ein Pressblock (12) zum Verringern des Volumens der Kavität (30) und Komprimieren des eingespritzten Pressharzes (31), und eine äußere Umfassungsplatte (11), die auf dem äußeren Rand des Pressblocks (12) angeordnet ist, an der zweiten Werkzeughälfte (2) vorgesehen sind, wobei die Kavität (30) von dem Pressblock (12), der äußeren Umfassungsplatte (11) und der ersten Werkzeughälfte (1) ausgebildet wird; ein Werkzeugkörper (14) in der zweiten Werkzeughälfte (2) einen innerlich angeordneten Arbeitsraum (60) hat; und eine Auswerferplatte (21) so in dem Arbeitsraum (60) angeordnet ist, dass sie dazu fähig ist, sich vorwärts und rückwärts zu bewegen;
**dadurch gekennzeichnet, dass**
ein Auswerferstift (24) zum Auswerfen des spritzgepressten Formteils so an der zweiten Werkzeughälfte (2) vorgesehen ist, dass er den Pressblock (12) durchdringt,
die Vorrichtung ferner einen elastischen Körper (13) umfasst, der zwischen einem Werkzeug (14), das den Pressblock (12) abstützt, und der äußeren Umfassungsplatte (11) vorgesehen ist, um eine elastische Kraft in einer Richtung auszuüben, die das Werkzeug (14) und die äußere Umfassungsplatte voneinander weg bewegt;
eine Vorderseiten-Trennwand (61), die einen Teil des Arbeitsraums (60) darstellt, ein Auswerferstift-Einführloch (62) und ein Einführloch (63) für den Auswerferplatten-Befestigungsstift (22) hat;
der Pressblock (12) auf der Außenseite der Vorderseiten-Trennwand (61) fest abgestützt ist;
der Pressblock (12) ein Auswerferstift-Einführloch (64) hat, das mit dem Auswerferstift-Einführloch (62) der Vorderseiten-Trennwand (61) kommuniziert;
die äußere Umfassungsplatte (11), die dazu fähig ist, sich von der Vorderseiten-Trennwand (61) zu trennen und diese zu kontaktieren, am äußeren Umfang des Pressblocks (12) angeordnet und relativ zu dem Pressblock (12) verschiebbar ist;
der Auswerferstift (24), der von der Auswerferplatte (21) fest abgestützt wird, durch die Auswerferstift-Einführlöcher (62) der Vorderseiten-Trennwand (61) und die Auswerferstift-Einführlöcher (64) des Pressblocks (12) angeordnet wird;
ein Auswerferplatten-Befestigungsstift (22), der einen trennungsgesicherten Kopf (65) an dessen hinterem Ende hat und sich durch die Auswerferplatte (21) erstreckt, in das Einführloch (63) für den Auswerferplatten-Befestigungsstift (22) eingeführt wird, wobei dessen distales Ende von der äußeren Umfassungsplatte (11) fest abgestützt wird;
Federn (23), die um den Auswerferplatten-Befestigungsstift (22) gewickelt sind, zwischen der Auswerferplatte (21) und der Vorderseiten-Trennwand (61) vorgesehen sind; und
die Positionsbeziehung zwischen dem Pressblock (12) und der äußeren Umfassungsplatte (11) variiert werden kann, ohne dabei die Positionsbeziehung zwischen der äußeren Umfassungsplatte (11) und dem Auswerferstift (24) zu ändern.

2. Spritzpresswerkzeug gemäß Anspruch 1, wobei der Auswerferstift (24) so angeordnet ist, dass er während des Einspritzens des Pressharzes (31) teilweise in die Kavität (30) hinein ragt.

3. Spritzpresswerkzeug gemäß Anspruch 1, wobei
die zweite Werkzeughälfte (2) ferner einen Lochstempel (25) umfasst, der durch den Pressblock (12) reicht; und
die Positionsbeziehung zwischen dem Pressblock (12) und der äußeren Umfassungsplatte (11) variiert werden kann, ohne dabei die Positionsbeziehung zwischen der äußeren Umfassungsplatte (11), dem Ausfwerferstift (24) und dem Lochstempel (25) zu ändern.

4. Spritzpresswerkzeug gemäß Anspruch 1, wobei die erste Werkzeughälfte (1) ein Saugmittel (70) zum Einziehen einer Dekorplatte (3) umfasst, die zwischen der ersten Werkzeughälfte (1) und der zweiten Werkzeughälfte (2) angeordnet ist.

5. Spritzpresswerkzeug gemäß Anspruch 1, das so konfiguriert ist, dass die erste Werkzeughälfte (1) und die zweite Werkzeughälfte (2) in einem Zustand, in dem das Dekorblatt (3) zwischen der ersten Werkzeughälfte (1) und der zweiten Werkzeughälfte (2) angeordnet ist, die zueinander weisend angeordnet sind, über einen Spalt (P) geschlossen werden, der der Dicke der Dekorplatte (3) entspricht.

## Revendications

1. Matrice de moulage par injection et compression destinée à former un article moulé par injection et compression en chargeant une résine de moulage fondue (31) jusque dans un espace de moulage (30), formé par une première matrice (1) et une deuxième matrice (2) qui se font face, via une unité de porte d'injection de résine de moulage (41) prévue sur ladite deuxième matrice (2), puis en réduisant le volume dudit espace de moulage (30) de sorte à comprimer ladite résine de moulage chargée (31), et en laissant durcir ladite résine de moulage ; où ladite matrice de moulage par injection et compression est configurée de sorte qu'un bloc de compression (12) destiné à réduire le volume dudit espace de moulage (30) et à comprimer ladite résine de moulage chargée (31), et une plaque périphérique externe (11) positionnée sur la périphérie externe dudit bloc de compression (12) sont prévus sur ladite deuxième matrice (2), ledit espace de moulage (30) étant formé par ledit bloc de compression (12), ladite plaque périphérique externe (11) et ladite première matrice (1) ; un corps de matrice (14) dans ladite deuxième matrice (2) présente un espace de travail disposé de manière interne (60) et ; une plaque d'éjecteur (21) est disposée dans ledit espace de travail (60) de sorte à pouvoir être déplacée vers l'avant et vers l'arrière ;
**caractérisée en ce que**
une broche d'éjecteur (24) destinée à éjecter ledit article moulé par injection et compression est prévue sur ladite deuxième matrice (2) de sorte à pénétrer dans ledit bloc de compression (12),
le dispositif comprend en outre un corps élastique (13) prévu entre une matrice (14) supportant ledit bloc de compression (12) et ladite plaque périphérique externe (11), destiné à exercer une force élastique dans un sens de sorte à écarter ladite matrice (14) de ladite plaque périphérique externe ;
une paroi de délimitation côté avant (61) constituant une partie dudit espace de travail (60) présente un trou d'insertion de broche d'éjecteur (62) et un trou d'insertion (63) destiné à la broche de fixation de plaque d'éjecteur (22) ;
ledit bloc de compression (12) est supporté de manière fixe sur l'extérieur de ladite paroi de délimitation côté avant (61) ;
ledit bloc de compression (12) présente un trou d'insertion de broche d'éjecteur (64) communiquant avec ledit trou d'insertion de broche d'éjecteur (62) de ladite paroi de délimitation côté avant (61) ;
ladite plaque périphérique externe (11) pouvant s'écarter de ladite paroi de délimitation côté avant (61) et venir au contact avec celle-ci est disposée sur la périphérie externe dudit bloc de compression (12) et peut coulisser par rapport au bloc de compression (12) ;
ladite broche d'éjecteur (24) supportée de manière fixe par ladite plaque d'éjecteur (21) est placée dans les trous d'insertion de broche d'éjecteur (62) de ladite paroi de délimitation côté avant (61) et les trous d'insertion de broche d'éjecteur (64) dudit bloc de compression (12) ;
une broche de fixation de plaque d'éjecteur (22) ayant une tête d'anti-désolidarisation (65) à l'arrière de celle-ci et s'étendant à travers ladite plaque d'éjecteur (21) est insérée dans ledit trou d'insertion (63) destiné à la broche de fixation de plaque d'éjecteur (22), dont l'extrémité distale est supportée de manière fixe par ladite plaque périphérique externe (11) ;
des ressorts (23) enroulés sur ladite broche de fixation de plaque d'éjecteur (22) sont prévus entre ladite plaque d'éjecteur (21) et ladite paroi de délimitation côté avant (61) ; et
la position relative dudit bloc de compression (12) par rapport à ladite plaque périphérique externe (11) peut être modifiée sans changer la position relative de ladite plaque périphérique externe (11) par rapport à ladite broche d'éjecteur (24).

2. Matrice de moulage par injection et compression selon la revendication 1, dans laquelle ladite broche d'éjecteur (24) est disposée de sorte à dépasser partiellement dans ledit espace de moulage (30) pendant le chargement de ladite résine de moulage (31).

3. Matrice de moulage par injection et compression selon la revendication 1, dans laquelle
la deuxième matrice (2) comprend en outre une douille de formation de trou (25) qui passe au travers dudit bloc de compression (12) ; et
la position relative dudit bloc de compression (12) par rapport à ladite plaque périphérique externe (11) peut être modifiée sans changer la position relative de ladite plaque périphérique externe (11) par rapport à ladite broche d'éjecteur (24), et à ladite douille de formation de trou (25).

4. Matrice de moulage par injection et compression selon la revendication 1, dans laquelle ladite première matrice (1) comprend un moyen d'aspiration (70) destiné à aspirer une feuille de décoration (3) disposée entre ladite première matrice (1) et ladite deuxième matrice (2).

5. Matrice de moulage par injection et compression selon la revendication 1, configurée de sorte que ladite première matrice (1) et ladite deuxième matrice (2) se referment l'une sur l'autre en laissant un espace (P) qui correspond à l'épaisseur de ladite feuille de décoration (3) dans un état dans lequel la feuille de décoration (3) est disposée entre ladite première matrice (1) et ladite deuxième matrice (2) qui se font face.
